# EUROPEAN PATENT APPLICATION

(11) **EP 4 461 985 A1**
(43) Date of publication of application: **13.11.2024**
(21) Application number: 22931431.5
(22) Date of filing: 18.03.2022
(51) Int. Cl.: F16D 65/12, C22C 21/00

(54) **LIGHTWEIGHT AUTOMOBILE BRAKE DISC AND PREPARATION METHOD THEREFOR**

(71) Applicant: Hunan Xiangtou Light Material Technology Co., Ltd, Hunan 416100 (CN)
(72) Inventor: CAO, Liuxu, Xiangxi, Hunan 416100 (CN); HUO, Shuhai, Xiangxi, Hunan 416100 (CN); LIU, Chunxuan, Xiangxi, Hunan 416100 (CN); JIANG, Zhaoru, Xiangxi, Hunan 416100 (CN); LUO, Ren, Xiangxi, Hunan 416100 (CN); QIU, Zhenyu, Xiangxi, Hunan 416100 (CN); WU, Yun, Xiangxi, Hunan 416100 (CN); WANG, Chang, Xiangxi, Hunan 416100 (CN); LIANG, Qiwen, Xiangxi, Hunan 416100 (CN)
(74) Representative: Appleyard Lees IP LLP
(86) International application number: PCT/CN2022/081640
(87) International publication number: WO 2023/173397

(57) **Abstract**

A lightweight automobile brake disc (10) and a preparation method therefor. A disc cap (110) of the lightweight automobile brake disc (10) is prepared from a first aluminum-based material with good processibility, and a disc body (120) is prepared from a second aluminum-based material with good wear resistance and heat resistance. By controlling the alloy element content of an aluminum alloy matrix in the first aluminum-based material to be smaller than or equal to the alloy element content of an aluminum alloy matrix in the second aluminum-based material, the sintering shrinking percentages of the two materials during a preparation process, in which a powder metallurgy method is used, are matched, and defects such as cracking does not occur during the preparation process. In addition, the thermal expansion coefficients of the two materials under the service working conditions of the automobile brake disc are also matched, such that the disc cap (110) and the disc body (120) are only metallurgically connected in a circumferential direction, that is, a higher interface bonding strength can be obtained. Moreover, brake performance requirements, such as friction wear and fatigue resistance, required by a traditional automobile brake disc (10) during the friction braking process are satisfied.

## Description

### TECHNICAL FIELD

The present application relates to the field of brake disc technologies, particularly to a lightweight automobile brake disc.

### BACKGROUND

Lightweight is one of the most effective means to realize energy saving and consumption reduction of automobiles and other transit vehicles. The application of high-performance light metal materials instead of steel and iron materials to key moving parts of transportation equipment engines, brake discs, and the like, may not only reduce the weight of the entire vehicle and reduce the momentum of high-speed moving parts of the transportation equipment, but also significantly improve the dynamic performance of the transportation equipment and reduce energy consumption.

Silicon carbide particle reinforced aluminum-based composite materials have low density, high specific strength and specific rigidity, high thermal conductivity, excellent antiwear and wear resistance, corrosion resistance, and have a broad application prospect in the field of lightweight structural parts. The use of silicon carbide particle reinforced aluminum-based composite materials to replace traditional brake disc materials also becomes the main research direction for the lightweight transportation vehicles.

Most of existing lightweight automobile brake discs use a disc cap prepared from aluminum alloy to achieve light weight, while a disc body still uses cast iron materials with good wear resistance, which requires the disc body and the disc cap to be able to move radially relative to each other to minimize a thermal tension generated in the disc body during each braking process. A radial degree of freedom is generated by a fitting gap generated by a machining and inserted connecting element, which leads to a high manufacturing cost. The inserted connecting element carries a large torque during the braking process and is easily deformed and broken, and affects driving safety.

CN111442039A discloses a lightweight wear-resistant aluminum-based powder metallurgy composite material automobile brake disc. The disc body is composed of an aluminum-based structural material, and a friction surface is composed of a wear-resistant aluminum-based composite material. The friction surface and the disc body are selected with lightweight materials of different textures to further reduce weight and reduce energy consumption while a friction performance is satisfied. However, in this automobile brake disc, the disc body actually consists of a disc cap and a support structure extending radially outward from the disc cap to between the two friction surfaces. By increasing a contact area between the friction surface and the disc body, a connection strength of the disc body and the friction surface are improved. The existence of the support structure undoubtedly increases a manufacturing cost and a complexity of the preparation process.

### TECHNICAL PROBLEM

The technical problem is how to connect a disc body and a disc cap to satisfy working condition requirements of a brake disc while their respective processing needs and working condition requirements are satisfied.

### SUMMARY

Accordingly, it is necessary to provide a new lightweight automotive brake disc with a disc body and a disc cap metallurgically connected in a circumferential direction, which can save manufacturing cost of a support structure and simplify a preparation process.

A lightweight automotive brake disc includes a disc cap and a disc body that are metallurgically connected in a circumferential direction, wherein the disc cap is made of a first aluminum-based material, the disc body is made of a second aluminum-based material, the first aluminum-based material consists of a ceramic reinforcing phase with a volume content of 0 to 30% and a balance of an aluminum alloy matrix, the second aluminum-based material consists of a ceramic reinforcing phase with a volume content of 30% to 70% and a balance of an aluminum alloy matrix, and an alloy element content of the aluminum alloy matrix in the first aluminum-based material is less than or equal to an alloy element content of the aluminum alloy matrix in the second aluminum-based material; wherein when the alloy element content of the aluminum alloy matrix in the first aluminum-based material is equal to the alloy element content of the aluminum alloy matrix in the second aluminum-based material, a volume content of the ceramic reinforcing phase in the first aluminum-based material is not equal to a volume content of the ceramic reinforcing phase in the second aluminum-based material.

In an embodiment, the aluminum alloy matrix is a two-series or six-series aluminum alloy.

In an embodiment, the two-series aluminum alloy is Al-Cu-Mg series alloy or Al-Cu-Mg-Si series alloy, and the six-series aluminum alloy is Al-Mg-Si series alloy.

In an embodiment, the Al-Cu-Mg series alloy is Al-4Cu-0.8Mg, the Al-Cu-Mg-Si series alloy is Al-2Cu-0.5Mg-0.7Si-0.5Mn, and the Al-Mg-Si series alloy is Al-0.6Mg-0.9Si or Al-1Mg-0.7Si-0.25Cu.

In an embodiment, the ceramic reinforcing phase in the first aluminum-based material is a ceramic reinforcing particle or a ceramic reinforcing fiber; when the ceramic reinforcing phase in the first aluminum-based material is the ceramic reinforcing particle, an average particle diameter of the ceramic reinforcing particle in the first aluminum-based material is 10µm to 40µm; when the ceramic reinforcing phase in the first aluminum-based material is the ceramic reinforcing fiber, a length-to-diameter ratio of the ceramic reinforcing fiber in the first aluminum-based material is 5 to 10, and a diameter of the ceramic reinforcing fiber is less than or equal to 50µm.

In an embodiment, the ceramic reinforcing phase in the second aluminum-based material is the ceramic reinforcing particle, and the average particle size of the ceramic reinforcing particle in the second aluminum-based material is 45µm to 100µm, and further preferably 45µm to 75µm.

In an embodiment, the ceramic reinforcing phase is at least one selected from carbide, nitride, oxide, silicide, and boride.

In an embodiment, the disc cap includes a cap body and a cap brim, the disc body includes a friction portion and a connecting portion, and an axial outer sidewall of the cap brim is metallurgically connected to an axial inner sidewall of the connecting portion in the circumferential direction.

In an embodiment, the axial outer sidewall of the cap brim is provided with a plurality of protruding portions or receiving openings along the circumferential direction, correspondingly, the axial inner sidewall of the connecting portion is provided with a plurality of receiving openings or protruding portions along the circumferential direction; when the cap brim is metallurgically connected to the connecting portion, the protruding portion is arranged in the receiving opening.

In an embodiment, a length direction of the protruding portion is parallel to or forms an angle with a radial direction of the brake disc.

The arrangement of the protruding portion can increase a contact area between the cap brim and the connecting portion, and an interface bonding strength is further increased between the disk cap and the disk body.

In an embodiment, the axial outer sidewall of the cap brim is provided with a plurality of protruding portions along the circumferential direction, and the axial inner sidewall of the connecting portion is correspondingly provided with a plurality of receiving openings along the circumferential direction. The length direction of the protruding portion forms an angle of 5° to 10° with the radial direction of the brake disc. The protruding portion slightly extends outward offset the radial direction, and a deformation can be relieved, an interface bonding strength between the disk cap and the disk body can be further improved.

Further, a circumferential width of each of the protruding portions gradually reduces or gradually increases along an extending direction (i.e., its length direction), or the circumferential width of each of the protruding portions first reduces, then increases, and then reduces along the extending direction.

In an embodiment, an axial thickness of the protruding portion is the same as an axial depth of the receiving opening, and is less than or equal to an axial thickness of the friction portion.

The present application also provides a method for preparing the above-mentioned lightweight automobile brake disc:

A method for preparing the lightweight automobile brake disc includes the following steps:

providing the first aluminum-based material and the second aluminum-based material;

pre-forming the first aluminum-based material and the second aluminum-based material respectively, or pre-forming one of the first aluminum-based material and the second aluminum-based material and filling the other of the first aluminum-based material and the second aluminum-based material with powders; then, pressing, sintering, and hot-press shaping to obtain the lightweight automobile brake disc.

In an embodiment, a pressure of the pre-forming is 30MPa to 70MPa; a pressure of the pressing is 200MPa to 400MPa, and further preferably 200MPa to 300MPa.

In an embodiment, the sintering is performed under the following condition: heating to 570°C to 640°C for 0.5h to 2h at a heating rate of 5°C/min to 10°C/min, preferably heating to 580°C to 600°C and keeping for 0.5h to 2h.

In an embodiment, a temperature of the hot-press shaping is 530°C to 570°C, and a pressure of the hot press shaping is 200MPa to 300MPa.

According to the above-mentioned lightweight automobile brake disc, the disc cap is made of the first aluminum-based material consisting of the ceramic reinforcing phase with the volume content of 0 to 30% and the aluminum alloy matrix, the disc body is made of the second aluminum-based material consisting of the ceramic reinforcing phase with the volume content of 30% to 70% and the aluminum alloy matrix. By controlling the alloy element content of the aluminum alloy matrix in the first aluminum-based material to be less than or equal to the alloy element content of the aluminum alloy matrix in the second aluminum-based material; and by controlling the alloy element content of the aluminum alloy matrix in the first aluminum-based material to be equal to the alloy element content of the aluminum alloy matrix in the second aluminum-based material, and the volume content of the ceramic reinforcing phase in the first aluminum-based material to be not equal to the volume content in the second aluminum-based material, the sintering shrinking percentages of the first aluminum-based material and the second aluminum-based material during a preparation process, in which a powder metallurgy method is used, are matched, and defects such as cracking does not occur during the preparation process. In addition, the thermal expansion coefficients of the two materials under the service working conditions of the automobile brake disc are also matched, such that the disc cap and the disc body are only metallurgically connected in a circumferential direction, that is, a higher interface bonding strength can be obtained.

The disk cap, which is made of the first aluminum-based material consisting of the ceramic reinforcing phase with a volume content of 0 to 30% and a balance of the aluminum alloy matrix, has high strength and good processibility, and a problem of molding difficulty, due to the high-volume ceramic reinforced aluminum-based composite material, can be avoided. The disc body, which is made of the second aluminum-based material consisting of the ceramic reinforcing phase with a volume content of 30% to 70% and the aluminum alloy matrix, has a good wear resistance and heat resistance, and brake performance requirements, such as friction wear and fatigue resistance, required by a traditional automobile brake disc during the friction braking process are satisfied.

In addition, compared to the automobile brake disc structure in which the disc cap and the disc body are axially connected, the lightweight automobile brake disc of the present application eliminates the preparation of the supporting structure between the friction surfaces. Both the disc cap and the disc body are made of the aluminum-based composite materials with the aluminum alloy as a matrix material, are lightweight, pressure should not be set separately for the disc cap and the disc body during pressing, an equipment design can be simplified, a preparation cost is saved, and the preparation process is simplified. At the same time, steps are avoided at the interface bonding due to different pressures during the pressing process, and the molding of the brake disc is affected.

### BRIEF DESCRIPTION OF THE DRAWINGS

FIG. 1 is a schematic structural view of a lightweight automobile brake disc according to an embodiment;
FIG. 2 is a sectional view of the lightweight automobile brake disc shown in FIG. 1;
FIG. 3 is a schematic exploded structural view of the lightweight automobile brake disc shown in FIG. 1;
FIG. 4 is a schematic structural view of a lightweight automobile brake disc according to another embodiment;
FIG. 5 is a sectional view of the lightweight automobile brake disc shown in FIG. 4;
FIG. 6 is a schematic exploded structure view of the lightweight automobile brake disc shown in FIG. 4.

### DETAILED DESCRIPTION

In order to facilitate the understanding of the present application, the present application will be described more fully hereinafter, and preferred embodiments of the present application are given below. However, the present application may be embodied in many different forms and is not limited to the embodiments described herein. Rather, these embodiments are provided so that the understanding of the present application will be more thorough and complete.

It should be noted that "axial direction" as used herein refers to a direction parallel to a rotation central axis of a brake disc, "radial direction" refers to a direction perpendicular to a rotation central axis of a brake disc, and "circumferential direction" refers to a circumferential direction of a disc body.

All technical and scientific terms used herein have the same meaning as commonly understood by persons skilled in the art to which the present application belongs, unless otherwise defined. The terms used in the specification of the present application herein are for the purpose of describing specific embodiments only and are not intended to limit the present application.

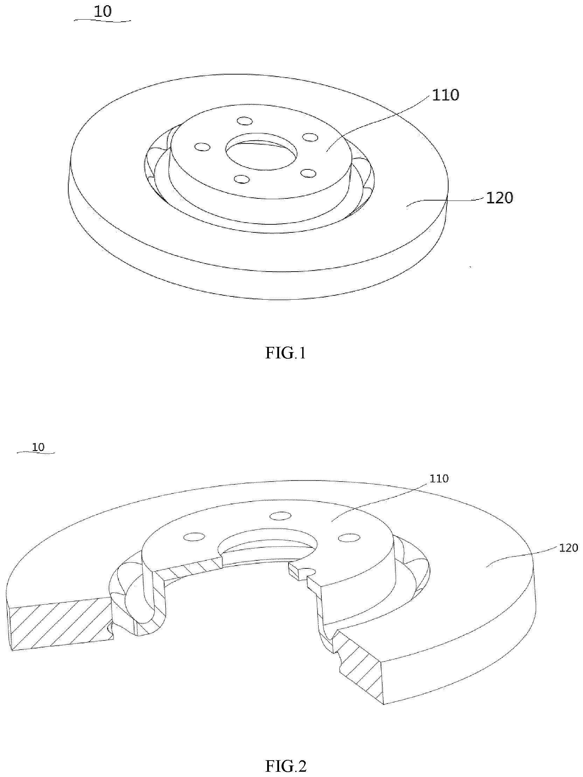

Referring to FIGS. 1 to 3, in an embodiment, a lightweight automobile brake disc 10 is provided, which includes a disc cap 110 and a disc body 120. The disk cap 110 includes a cap body 112 and a cap brim 114. The disk body 120 includes a friction portion 122 and a connecting portion 124. An axial outer sidewall of the cap brim 114 is metallurgically connected to an axial inner sidewall of the connecting portion 124 in a circumferential direction, such that the disk cap 110 and the disk body 120 are metallurgically connected in the circumferential direction.

Specifically, the axial outer sidewall of the cap brim 114 is provided with a plurality of protruding portions 1142 evenly distributed along the circumferential direction. The protruding portions 1142 extend outward, and a length direction of the protruding portions 1142 forms an angle (5° to 10°) with a radial direction of the brake disc. The connecting portion 124 is provided with receiving openings 1242 matched with the protruding portions 1142, and each of the protruding portion 1142 is tightly accommodated in the corresponding receiving opening 1242. An axial sidewall of each of the receiving opening 1242 is metallurgically connected to the axial sidewall of the corresponding protruding portion 1142, such that the axial outer sidewall of the cap brim 114 and the axial inner sidewall of the connecting portion 124 are metallurgically connected in the circumferential direction.

The above-mentioned arrangement of the protruding portions 1142 can increase a contact area between the cap brim 114 and the connecting portion 124, thus increasing an interface bonding strength between the cap brim 114 and the connecting portion 124, such that a higher interface bonding strength can be obtained merely by a metallurgical connection between the disk cap 110 and the disk body 120 in the circumferential direction.

In the embodiment, the protruding portion 1142 extends outwardly offset from the radial direction, which can relieve deformation to some extent and prolong the service life of the brake disc.

In the embodiment, a circumferential width of each of the protruding portion 1142 gradually reduces along the extending direction (i.e., its length direction) to form an arc shape or a serrated shape.

It should be understood that in other embodiments, the circumferential width of each of the protruding portion 1142 may gradually increase along the extending direction, such that a mutually snap-fit structure can be formed between the cap brim 114 and the connecting portion 124, which further increases the connection strength between the disk cap 110 and the disk body 120.

Further, an axial thickness of the protruding portion 1142 is the same as an axial depth of the receiving opening 1242, and is less than or equal to an axial thickness of the friction portion 122. When the axial thickness of the protruding portion 1142 is less than the axial thickness of the friction portion 122, a heat dissipation and a dust removal of the friction portion 122 are facilitated.

According to the above-mentioned lightweight automobile brake disc 10, the disc cap 110 is made of a first aluminum-based material, and the disc body 120 is made of a second aluminum-based material. The specific preparation method includes the following steps S110 to S130:

S110, the first aluminum-based material and the second aluminum-based material are provided.

The first aluminum-based material consists of a ceramic reinforcing phase with a volume content of 0 to 30% and a balance of an aluminum alloy matrix, the second aluminum-based material consists of a ceramic reinforcing phase with a volume content of 30% to 70% and a balance of an aluminum alloy matrix, and an alloy element content of the aluminum alloy matrix in the first aluminum-based material is less than or equal to an alloy element content of the aluminum alloy matrix in the second aluminum-based material. When the alloy element content of the aluminum alloy matrix in the first aluminum-based material is equal to the alloy element content of the aluminum alloy matrix in the second aluminum-based material, a volume content of the ceramic reinforcing phase in the first aluminum-based material is not equal to a volume content of the ceramic reinforcing phase in the second aluminum-based material.

It should be noted that the above alloy element content is relative to the aluminum alloy matrix. The alloy element content refers to mass content.

Further, the aluminum alloy matrix is a second series or six series aluminum alloy. The second series aluminum alloy is an aluminum alloy with copper as the main alloy element, including Al-Cu-Mg-Si series alloy, and Al-Cu-Mg-Si series alloy, etc. The six series aluminum alloy is an aluminum alloy with magnesium and silicon as the main alloy elements and Mg₂Si phase as a reinforcing phase, including Al-Mg-Si series alloy, etc.

Further, the Al-Mg-Si series alloy is Al-1Mg-0.7Si-0.25Cu (i.e., the alloy mainly consists of Mg with a mass content of 1%, Si with a mass content of 0.7%, Cu with a mass content of 0.25% and a balance of Al) or Al-0.6Mg-0.9Si (i.e., the alloy mainly consists of Mg with a mass content of 0.6% and Si with a mass content of 0.9% and a balance of Al). The Al-Cu-Mg series alloy is Al-4Cu-0.8Mg (i.e., the alloy mainly consists of Cu with a mass content of 4%, Mg with a mass content of 0.8% and a balance of Al). The Al-Cu-Mg-Si series alloy is Al-2Cu-0.5Mg-0.7Si-0.5Mn (i.e., the alloy mainly consists of Cu with a mass content of 2%, Mg with a mass content of 0.5%, Si with a mass content of 0.7%, Mn with a mass content of 0.5% and a balance of Al).

It should be noted that the aluminum alloy matrix in the first aluminum-based material and the aluminum alloy matrix in the second aluminum-based material may be of the same series or different series, as long as the alloy element content of the aluminum alloy matrix in the first aluminum-based material is less than or equal to the alloy element content of the aluminum alloy matrix in the second aluminum-based material. When controlling the alloy element content of the aluminum alloy matrix in the first aluminum-based material to be equal to the alloy element content of the aluminum alloy matrix in the second aluminum-based material, the volume content of the ceramic reinforcing phase in the first aluminum-based material is not equal to the volume content of the ceramic reinforcing phase in the second aluminum-based material.

Further, the ceramic reinforcing phase in the first aluminum-based material may be ceramic reinforcing particles or ceramic reinforcing fibers. When the ceramic reinforcing phase in the first aluminum-based material is the ceramic reinforcing particle, an average particle size of the ceramic reinforcing particle is 10µm to 40µm. When the ceramic reinforcing phase in the first aluminum-based material is ceramic reinforcing fiber, a length-to-diameter ratio of the ceramic reinforcing fiber is 5 to 10, and the diameter thereof is less than or equal to 50µm.

The ceramic reinforcing phase in the second aluminum-based material may be ceramic reinforcing particles, and the average particle size of the ceramic reinforcing particle is 45µm to 100µm, and further preferably the average particle size is 45µm to 75µm.

Further, the ceramic reinforcing phase is at least one selected from the group consisting of carbide (such as TiC, SiC, and B₄C, etc.), nitride (such as Si₃N₄), oxide (such as Al₂O₃), silicide (such as Ti₅Si₃), and boride (such as TiB and TiB₂, etc.).

It should be noted that the ceramic reinforcing phase in the first aluminum-based material and the ceramic reinforcing phase in the second aluminum-based material may be the same or different.

S 120, the first aluminum-based material is placed in a disk cap mold for preforming to obtain a disk cap pre-pressing blank; at the same time, placing the second aluminum-based material in a disk body mold for pre-forming to obtain a disk body pre-pressing blank.

Alternatively, after the first aluminum-based material is placed in the disk cap mold for pre-forming, the second aluminum-based material is correspondingly filled into the disk body mold;

A pressure for the pre-forming in step S120 is 30MPa to 70MPa.

S130, pressing, sintering and hot-press shaping are performed to obtain the lightweight automobile brake disc.

A pressure for the pressing is 200MPa to 400MPa. The sintering is performed under the following condition: heating to 570°C to 640°C with a heating rate of 5°C/min to 10°C/min, and keeping for 0.5h to 2h. A temperature of the hot-press shaping is 530°C to 570°C, a pressure of the hot-press shaping is 200MPa to 300MPa.

Further preferably, a pressure of the pressing is 200MPa to 300MPa. The sintering is performed under the following condition: heating to 580°C to 600°C with a heating rate of 5°C/min to 10°C/min, and keeping for 0.5h to 2h.

It should be noted that the above-mentioned lightweight automobile brake disc 10 can also be prepared by other methods, as long as the disc cap 110 and the disc body 120 can be metallurgically connected in the circumferential direction.

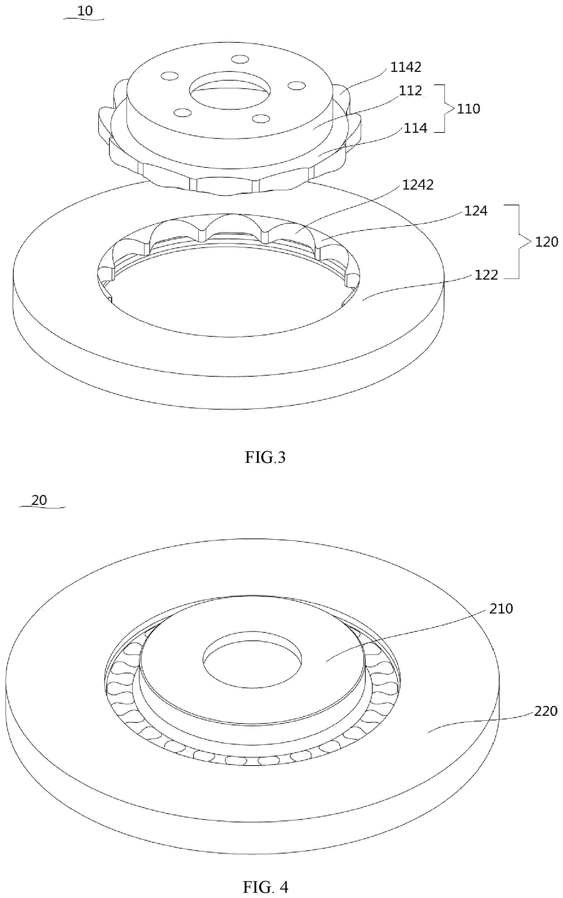

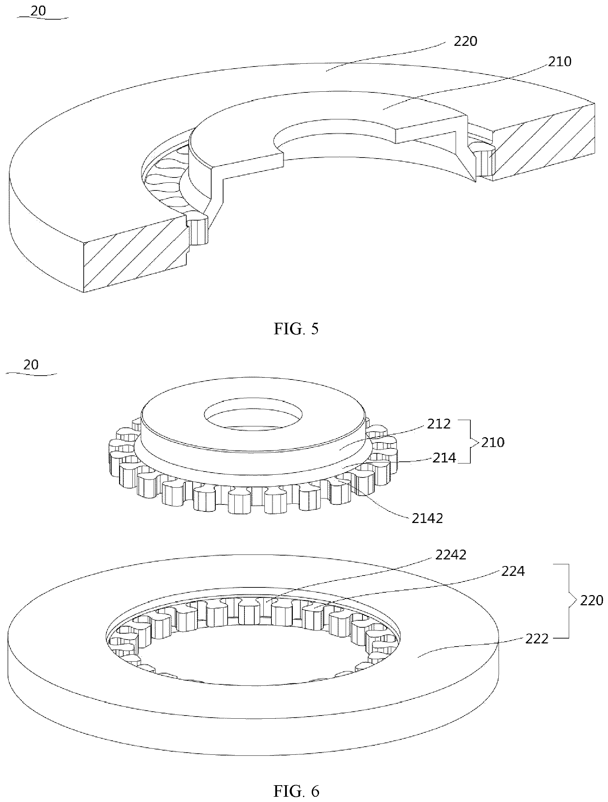

Referring to FIGS. 4 to 6, another embodiment of a lightweight automotive brake disc 20 is provided, which includes a disc cap 210 and a disc body 220. The disk cap 210 includes a cap body 212 and a cap brim 214. The disk body 220 includes a friction portion 222 and a connecting portion 224. An axial outer sidewall of the cap brim 214 is metallurgically connected to the axial inner sidewall of the connecting portion 224 in a circumferential direction, such that the disk cap 210 is metallurgically connected to the disk body 220 in the circumferential direction.

Further preferably, the axial outer sidewall of the cap brim 214 is provided with a plurality of protruding portions 2142 evenly distributed along the circumferential direction. The protruding portion 2142 is parallel to a radial direction of the brake disc (i.e., the protruding portion extends outward along the radial direction). The connecting portion 224 is provided with receiving openings 2242 matched with the protruding portions 2142, and each protruding portion 2142 is tightly accommodated in the corresponding receiving opening 2242. An axial sidewall of each of the receiving opening 2242 is metallurgically connected to the axial sidewall of the corresponding protruding portion 2142, such that the axial outer sidewall of the cap brim 214 and the axial inner sidewall of the connecting portion 224 are metallurgically connected in the circumferential direction.

An axial outer sidewall of the cap brim 214 is provided with a plurality of the protruding portions 2142 evenly distributed along the circumferential direction, the contact area between the cap brim 214 and the connecting portion 224 can be increased, and the interface bonding strength between the cap brim 214 and the connecting portion 224 can be increased.

Further, in the embodiment, a circumferential width of each protruding portion 2142 first reduces, then increases, and then reduces along the extending direction, such that a mutually snap-fit structure can be formed between the cap brim 214 and the connecting portion 224, which further increases the connection strength between the disk cap 210 and the disk body 220.

Further, an axial thickness of the protruding portion 2142 is the same as an axial depth of the receiving opening 2242, and is less than or equal to an axial thickness of the friction portion 222. When the axial thickness of the protruding portion 2142 is less than the axial thickness of the friction portion 222, heat dissipation and dust removal of the friction portion 222 are facilitated.

The specific preparation method of the above-mentioned lightweight automobile brake disc 20 is the same as the above-mentioned steps S110 to S130, and will not be further described here.

For the lightweight automobile brake disc of the present application, embodiments and comparative embodiments will be provided below to illustrate the influence of the volume content of the ceramic reinforcing phase and the alloy element content in the aluminum alloy matrix in their composition ratio on the finished product.

### Example 1:

In this example, the structural form shown in FIGS. 1 to 3 is adopted, the first aluminum-based material consists of Al-3Cu-0.8Mg, the second aluminum-based material consists of the silicon carbide particle with a volume content of 30% and a balance of Al-4Cu-0.8Mg. The average particle size of the silicon carbide particle in the second aluminum-based material is 45µm.

Using the preparation method as in steps S110 to S130, after testing, an interface bonding strength between the disc cap and the disc body in the lightweight automobile brake disc is 200MPa or more. The lightweight automobile brake disc was subjected to bench testing, and completed and passed two bench tests of T/CAAMTB 09 -2018 high load and Jaso C 419 -2006 torsion failure. It indicates that a structural strength and friction and wear property of the brake disc satisfy requirements of the brake disc.

### Example 2:

In this example, the structural form shown in FIGS. 1 to 3 is adopted, the first aluminum-based material consists of the silicon carbide particle with a volume content of 5% and a balance of Al-1Mg-0.7Si-0.25Cu, and the second aluminum-based material consists of the silicon carbide particle with a volume content of 35% and a balance of Al-4Cu-0.8Mg. The average particle diameter of silicon carbide particle in the first aluminum-based material is 10µm, and the average particle diameter of the silicon carbide particle in the second aluminum-based material is 50µm.

Using the preparation method as in steps S110 to S130, after testing, an interface bonding strength between the disc cap and the disc body in the lightweight automobile brake disc is 180MPa or more. The lightweight automobile brake disc was subjected to bench testing, and completed and passed two bench tests of T/CAAMTB 09 -2018 high load and Jaso C 419 -2006 torsion failure. It indicates that a structural strength and friction and wear property of the brake disc satisfy requirements of the brake disc.

### Example 3:

In this example, the structural form shown in FIGS. 2 to 4 is adopted, the first aluminum-based material consists of silicon carbide reinforcing fiber with a volume content of 10% and a balance of Al-2Cu-0.5Mg-0.7Si-0.5Mn, and the second aluminum-based material consists of the silicon carbide reinforcing particle with a volume content of 40% and a balance of Al-2Cu-0.5Mg-0.7Si-0.5Mn. The length-to-diameter ratio of the silicon carbide reinforcing fiber in the first aluminum-based material is 5, and the diameter thereof is less than or equal to 50µm. The average particle diameter of the silicon carbide reinforcing particle in the second aluminum-based material is 50µm.

Using the preparation method as in steps S110 to S 130, after testing, an interface bonding strength between the disc cap and the disc body in the lightweight automobile brake disc is 150MPa or more. The lightweight automobile brake disc was subjected to bench testing, and completed and passed two bench tests of T/CAAMTB 09 -2018 high load and Jaso C 419 -2006 torsion failure. It indicates that a structural strength and friction and wear property of the brake disc satisfy requirements of the brake disc.

### Example 4:

In this example, an axial outer sidewall of the cap brim and an axial inner sidewall of the connecting portion are directly metallurgically connected in the circumferential direction (i.e., the protruding portion and the receiving opening are not arranged). The first aluminum-based material consists of Si₃N₄ reinforcing fiber with a volume content of 15% and a balance of Al-1Mg-0.7Si-0.25Cu, and the second aluminum-based material consists of Si₃N₄ reinforcing particle with a volume content of 50% and a balance of Al-2Cu-0.5Mg-0.7Si-0.5Mn. The length-to-diameter ratio of Si₃N₄ reinforcing fiber in the first aluminum-based material is 7, and the diameter thereof is less than or equal to 50µm. The average particle diameter of Si₃N₄ reinforcing particle in the second aluminum-based material is 55µm.

Using the preparation method as in steps S110 to S 130, after testing, an interface bonding strength between the disc cap and the disc body in the lightweight automobile brake disc is 150MPa or more. The lightweight automobile brake disc was subjected to bench testing, and completed and passed two bench tests of T/CAAMTB 09 -2018 high load and Jaso C 419 -2006 torsion failure. It indicates that a structural strength and friction and wear property of the brake disc satisfy requirements of the brake disc.

### Example 5:

In this example, the structural form shown in FIGS. 2 to 4 is adopted, the first aluminum-based material consists of Al₂O₃ reinforcing fiber with a volume content of 20% and a balance of Al-0.6Mg-0.9Si, and the second aluminum-based material consists of Al₂O₃ reinforcing particle with a volume content of 50% and a balance of Al-4Cu-0.8Mg. The length-to-diameter ratio of Al₂O₃ reinforcing fiber in the first aluminum-based material is 10, and the diameter thereof is less than or equal to 50µm. The average particle diameter of Al₂O₃ reinforcing particle in the second aluminum-based material is 60µm.

Using the preparation method as in steps S110 to S130, after testing, an interface bonding strength between the disc cap and the disc body in the lightweight automobile brake disc is 150MPa or more. The lightweight automobile brake disc was subjected to bench testing, and completed and passed two bench tests of T/CAAMTB 09 -2018 high load and Jaso C 419 -2006 torsion failure. It indicates that a structural strength and friction and wear property of the brake disc satisfy requirements of the brake disc.

### Example 6:

In this example, the structural form shown in FIGS. 2 to 4 is adopted, the first aluminum-based material consists of Al₂O₃ particle with a volume content of 25% and a balance of Al-1Mg-0.7Si-0.25Cu, and the second aluminum-based material consists of Al₂O₃ particle with a volume content of 55% and a balance of Al-1Mg-0.7Si-0.25Cu. The average particle diameter of Al₂O₃ particle in the first aluminum-based material is 30µm, and the average particle diameter of Al₂O₃ particle in the second aluminum-based material is 60µm.

Using the preparation method as in steps S110 to S 130, after testing, an interface bonding strength between the disc cap and the disc body in the lightweight automobile brake disc is 150MPa or more. The lightweight automobile brake disc was subjected to bench testing, and completed and passed two bench tests of T/CAAMTB 09 -2018 high load and Jaso C 419 -2006 torsion failure. It indicates that a structural strength and friction and wear property of the brake disc satisfy requirements of the brake disc.

### Example 7:

In this example, the axial outer sidewall of the cap brim and the axial inner sidewall of the connecting portion are directly metallurgically connected in the circumferential direction (i.e., the protruding portion and the receiving opening are not arranged). The first aluminum-based material consists of Al₂O₃ particle with a volume content of 30% and a balance of Al-1Mg-0.7Si-0.25Cu, and the second aluminum-based material consists of Al₂O₃ particle with a volume content of 70% and a balance of Al-1Mg-0.7Si-0.25Cu. The average particle diameter of Al₂O₃ particle in the first aluminum-based material is 40µm, and the average particle diameter of Al₂O₃ particle in the second aluminum-based material is 100µm.

Using the preparation method as in steps S110 to S 130, after testing, an interface bonding strength between the disc cap and the disc body in the lightweight automobile brake disc is 150MPa or more. The lightweight automobile brake disc was subjected to bench testing, and completed and passed two bench tests of T/CAAMTB 09 -2018 high load and Jaso C 419 -2006 torsion failure. It indicates that a structural strength and friction and wear property of the brake disc satisfy requirements of the brake disc.

### Example 8:

In this example, the structural form shown in FIGS. 2 to 4 is adopted, the first aluminum-based material consists of Si₃N₄ reinforcing fiber with a volume content of 30% and a balance of Al-0.6Mg-0.9Si, and the second aluminum-based material consists of Si₃N₄ reinforcing particle with a volume content of 30% and a balance of Al-4Cu-0.8Mg. The length-to-diameter ratio of Si₃N₄ reinforcing fiber in the first aluminum-based material is 7, and the diameter thereof is less than or equal to 50µm. The average particle diameter of Si₃N₄ reinforcing particle in the second aluminum-based material is 100µm.

Using the preparation method as in steps S110 to S130, after testing, an interface bonding strength between the disc cap and the disc body in the lightweight automobile brake disc is 150MPa or more. The lightweight automobile brake disc was subjected to bench testing, and completed and passed two bench tests of T/CAAMTB 09 -2018 high load and Jaso C 419 -2006 torsion failure. It indicates that a structural strength and friction and wear property of the brake disc satisfy requirements of the brake disc.

### Comparative Example 1:

In this comparative example, the structural form shown in FIGS. 2 to 4 is adopted, the first aluminum-based material consists of Si₃N₄ reinforcing fiber with a volume content of 30% and a balance of Al-0.6Mg-0.9Si, and the second aluminum-based material consists of Si₃N₄ reinforcing particle with a volume content of 30% and a balance of Al-0.6Mg-0.9Si. The length-to-diameter ratio of Si₃N₄ reinforcing fiber in the first aluminum-based material is 7, and the diameter thereof is less than or equal to 50µm. The average particle diameter of Si₃N₄ reinforcing particle in the second aluminum-based material is 50µm.

Using the preparation method as in steps S110 to S130, it is found that after the sintering is completed, the shrinking percentage of the first aluminum-based material is greater than the shrinking percentage of the second aluminum-based material. The two aluminum-based materials do not form an effective metallurgical collection, and a crack appeared at the interface bonding.

### Comparative Example 2:

In this comparative example, the structural form shown in FIGS. 1 to 3 is adopted, the first aluminum-based material consists of Al-3Cu-0.8Mg, and the second aluminum-based material consists of silicon carbide particle with a volume content of 30% and a balance of Al-4Cu-0.8Mg. The average particle diameter of silicon carbide particle in the second aluminum-based material is 45µm.

Using the preparation method as in steps S110 to S130, a braking efficiency bench test was conducted in accordance with QC/T 564-2008. Due to a low ceramic content of a brake disc friction ring, i.e., the second aluminum-based material, the temperature resistance is not up to standard, and a furrow obviously appears on the surface of the disc body.

### Comparative Example 3:

In this comparative example, the structural form shown in FIGS. 2 to 4 is adopted, the first aluminum-based material consists of Al₂O₃ reinforcing fiber with a volume content of 20% and a balance of Al-4Cu-0.8Mg, and the second aluminum-based material consists of Al₂O₃ reinforcing particle with a volume content of 50% and a balance of Al-0.6Mg-0.9Si. The length-to-diameter ratio of Al₂O₃ reinforcing fiber in the first aluminum-based material is 10, and the diameter thereof is less than or equal to 50µm. The average particle diameter of Al₂O₃ reinforcing particle in the second aluminum-based material is 45µm.

Using the preparation method as in steps S 110 to S130, it is found that after the sintering is completed, the shrinking percentage of the first aluminum-based material is greater than the shrinking percentage of the second aluminum-based material. The two aluminum-based materials do not form an effective metallurgical collection, and a crack appears at the interface bonding.

### Comparative Example 4:

In this comparative example, an axial outer sidewall of the cap brim and an axial inner sidewall of the connecting portion are directly metallurgically connected in the circumferential direction (i.e., the protruding portion and the receiving opening are not arranged). The first aluminum-based material consists of Al₂O₃ particle with a volume content of 30% and a balance of Al-1Mg-0.7Si-0.25Cu, and the second aluminum-based material consists of Al₂O₃ particle with a volume content of 75% and a balance of Al-1Mg-0.7Si-0.25Cu. The average particle diameter of Al₂O₃ particle in the first aluminum-based material is 40µm, and the average particle diameter of Al₂O₃ particle in the second aluminum-based material is 100µm.

Using the preparation method as in steps S110 to S130, it is found that after the sintering is completed, the first aluminum-based material shrinks and the second aluminum-based material expands significantly. The two aluminum-based materials do not form an effective metallurgical collection, and a crack appears at the interface bonding.

### Comparative Example 5:

In this comparative example, the structural form shown in FIGS. 2 to 4 is adopted, the first aluminum-based material consists of Al₂O₃ particle with a volume content of 25% and a balance of Al-1Mg-0.7Si-0.25Cu, and the second aluminum-based material consists of Al₂O₃ particle with a volume content of 55% and a balance of Al-1Mg-0.7Si-0.25Cu. The average particle diameter of Al₂O₃ particle in the first aluminum-based material is 30µm, and the average particle diameter of Al₂O₃ particle in the second aluminum-based material is 35µm.

Using the preparation method as in steps S110 to S130, it is found that after the sintering is completed, the shrinking percentage of the first aluminum-based material is greater than the shrinking percentage of the second aluminum-based material. The two aluminum-based materials do not form an effective metallurgical collection at a part of circumferential area, and a crack appears at the interface bonding.

### Comparative Example 6:

In this comparative example, the structural form shown in FIGS. 2 to 4 is adopted, the first aluminum-based material consists of Al₂O₃ particle with a volume content of 25% and a balance of Al-1Mg-0.7Si-0.25Cu, and the second aluminum-based material consists of Al₂O₃ particle with a volume content of 55% and a balance of Al-1Mg-0.7Si-0.25Cu. The average particle diameter of Al₂O₃ particle in the first aluminum-based material is 5µm, and the average particle diameter of Al₂O₃ particle in the second aluminum-based material is 35µm.

Using the preparation method as in steps S110 to S 130, a braking efficiency bench test was conducted in accordance with QC/T 564-2008. Due to a relatively small ceramic particle of a brake disc friction ring, i.e., the second aluminum-based material, the wear resistance is not up to standard, and a furrow obviously appears on the surface of the disc body.

### Comparative Example 7:

In this comparative example, the structural form shown in FIGS. 2 to 4 is adopted, the first aluminum-based material consists of Al₂O₃ reinforcing fiber with a volume content of 20% and a balance of Al-0.6Mg-0.9Si, and the second aluminum-based material consists of Al₂O₃ reinforcing particle with a volume content of 50% and a balance of Al-4Cu-0.8Mg. The length-to-diameter ratio of Al₂O₃ reinforcing fiber in the first aluminum-based material is 12, and the diameter thereof is less than or equal to 50µm. The average particle diameter of Al₂O₃ reinforcing particle in the second aluminum-based material is 50µm.

Using the preparation methods as in steps S 110-S 130, due to the fiber in the first aluminum-based material is too slender, the reinforcing phase fiber cannot be uniformly dispersed in the aluminum-based composite material, its mechanical properties are affected and the interface structure of the reinforcing phase fiber and the second aluminum-based material are also affected. The lightweight brake disc cannot be successfully prepared.

It can be seen from the comparison of the results of Examples 1-8 and Comparative Examples 1-7 that when the same component is prepared using materials with different compositions, the interfacial bonding effect in different materials needs to be fully considered. In a powder metallurgy process, the sintering stage determines a property of the prepared parts. When the sintering shrinking percentages of the two materials are significantly different, the interface bonding effect between the two materials will be affected. Adjusting the sintering shrinking percentage of powder metallurgy materials is closely related to factors such as raw material particle size, alloy element composition, powder molding pressure and sintering temperature, as well as a process design. A difference in the shrinking percentage is essentially a difference in a material densification process during the sintering process. The present application achieves a collaborative design of the shrinking percentage by controlling the particle size, the content of the reinforcing phase and the content of the alloy element to ensure a good interface bonding between the two materials. At the same time, the two materials exert their respective performance characteristics in different directions of structural strength and wear resistance function.

Finally, it should be noted that the lightweight automobile brake disc of the present application is not limited to the structure shown in the above-described embodiments. The above-mentioned embodiments are merely illustrative of several embodiments of the present application, which are described specifically and in detail, but it cannot be understood to limit the scope of the present application. It should be noted that a plurality of variations and modifications may be made by those skilled in the art without departing from the scope of the present application, which are all within the protection scope of the present application. Therefore, the protection scope of the present application shall be defined by the appended claims.

## Claims

1. A lightweight automotive brake disc, comprising a disc cap and a disc body that are metallurgically connected in a circumferential direction, wherein the disc cap is made of a first aluminum-based material, the disc body is made of a second aluminum-based material, the first aluminum-based material consists of a ceramic reinforcing phase with a volume content of 0 to 30% and a balance of an aluminum alloy matrix, the second aluminum-based material consists of a ceramic reinforcing phase with a volume content of 30% to 70% and a balance of an aluminum alloy matrix, and an alloy element content of the aluminum alloy matrix in the first aluminum-based material is less than or equal to an alloy element content of the aluminum alloy matrix in the second aluminum-based material;
when the alloy element content of the aluminum alloy matrix in the first aluminum-based material is equal to the alloy element content of the aluminum alloy matrix in the second aluminum-based material, a volume content of the ceramic reinforcing phase in the first aluminum-based material is not equal to a volume content of the ceramic reinforcing phase in the second aluminum-based material.

2. The lightweight automotive brake disc according to claim 1, wherein the aluminum alloy matrix is a two series or six series aluminum alloy.

3. The lightweight automotive brake disc according to claim 2, wherein the two series aluminum alloy is Al-Cu-Mg series alloy or Al-Cu-Mg-Si series alloy, and the six series aluminum alloy is Al-Mg-Si series alloy.

4. The lightweight automobile brake disc according to any one of claims 1 to 3, wherein the ceramic reinforcing phase in the first aluminum-based material is a ceramic reinforcing particle or a ceramic reinforcing fiber;
when the ceramic reinforcing phase in the first aluminum-based material is the ceramic reinforcing particle, an average particle diameter of the ceramic reinforcing particle in the first aluminum-based material is 10µm to 40µm;
when the ceramic reinforcing phase in the first aluminum-based material is the ceramic reinforcing fiber, a length-to-diameter ratio of the ceramic reinforcing fiber in the first aluminum-based material is 5 to 10, and a diameter of the ceramic reinforcing fiber is less than or equal to 50µm.

5. The lightweight automobile brake disc according to claim 4, wherein the ceramic reinforcing phase in the second aluminum-based material is the ceramic reinforcing particle, and the average particle size of the ceramic reinforcing particle in the second aluminum-based material is 45µm to 100µm.

6. The lightweight automobile brake disc according to claim 1, wherein the disc cap comprises a cap body and a cap brim, the disc body comprises a friction portion and a connecting portion, and an axial outer sidewall of the cap brim is metallurgically connected to an axial inner sidewall of the connecting portion in the circumferential direction.

7. The lightweight automobile brake disc according to claim 6, wherein the axial outer sidewall of the cap brim is provided with a plurality of protruding portions or receiving openings along the circumferential direction, correspondingly, the axial inner sidewall of the connecting portion is provided with a plurality of receiving openings or protruding portions along the circumferential direction; when the cap brim is metallurgically connected to the connecting portion, the protruding portion is arranged in the receiving opening.

8. The lightweight automobile brake disc according to claim 7, wherein a length direction of the protruding portion is parallel to or forms at an angle with a radial direction of the brake disc.

9. A method for preparing the lightweight automobile brake disc according to any one of claims 1 to 8, comprising the following steps:
providing the first aluminum-based material and the second aluminum-based material;
pre-forming the first aluminum-based material and the second aluminum-based material, respectively, or pre-forming one of the first aluminum-based material and the second aluminum-based material and filling the other of the first aluminum-based material and the second aluminum-based material with powders; then pressing, sintering, and hot-press shaping to obtain the lightweight automobile brake disc.

10. The method for preparing the lightweight automobile brake disc according to claim 9, wherein a pressure of the pre-forming is 30MPa to 70MPa; a pressure of the pressing is 200MPa to 400MPa;
the sintering is performed under the following condition: heating to 570°C to 640°C with a heating rate of 5°C/min to 10°C/min, and keeping for 0.5h to 2h;
a temperature of the hot-press shaping is 530°C to 570°C, and a pressure of the hot press shaping is 200MPa to 300MPa.
